# DEMANDE DE BREVET EUROPEEN

(11) **EP 2 254 275 A1**
(43) Date de publication de la demande: **24.11.2010**
(21) Numéro de dépôt: 09305445.0
(22) Date de dépôt: 18.05.2009
(51) Int. Cl.: H04L 9/08, H04L 9/32, G06F 21/00, H04N 1/44, H04L 29/06

(54) **Procédé de chiffrement de parties particulières d'un document pour les utilisateurs privilèges**

(71) Demandeur: Gemalto SA, 92190 Meudon (FR)
(72) Inventeur: Girard, Pierre, 13112, LA DESTROUSSE (FR); Gemeto, Marc, 13420, GEMENOS (FR); Vanizette, Christian, 13090, AIX EN PROVENCE (FR)

(57) **Abrégé**

Le procédé de l'invention consiste en l'encapsulation, dans un même document, d'une version de l'information accessible par tous les usagers, et une version consultable uniquement par un ensemble exhaustif et prédéfini d'usagers.

## Description

L'invention concerne un procédé de diffusion garantissant la protection de la vie privée, et procédé de consultation associé.

L'invention porte en particulier sur le chiffrement multi-sélectif de données.

L'évolution exponentielle des moyens de communication, et notamment ceux basés sur internet favorisent les échanges de documents de tous types. Le développement de sites de « réseaux sociaux » accentue encore ces échanges, et incite à la publication d'information pouvant porter atteinte à la vie privée. En effet les « reseaux sociaux » permettent à leurs utilisateurs d'entrer des informations personnelles et d'interagir avec d'autres utilisateurs. Les informations susceptibles d'être mises à disposition du réseau concernent l'état civil, les études et les centres d'intérêt. Ces informations permettent de retrouver les utilisateurs partageant des mêmes centres d'intérêt. Ces derniers peuvent former des groupes et y inviter d'autres personnes. Les interactions entre membres incluent le partage de correspondance et de documents multimédias.

Ces échanges peuvent se faire de plusieurs manière
- un document peut être échangé entre deux utilisateurs, auquel cas on perlera d'échange « de point a point ». Dans ce mode d'échange, un utilisateur dit émetteur envoie un ensemble d'informations à un autre utilisateur duquel il connait l'adresse. Ce mode de communication est par exemple illustré par la messagerie électronique, ou les SMS (pour Short Message Service) de la téléphonie mobile.
- Un document peut être mis a disposition de tout ou partie des utilisateurs. On est ici dans un mode appelé diffusion, ou un utilisateur dit émetteur dépose un ensemble d'informations à un endroit ou il sera possible pour des utilisateurs de venir les consulter.

Nous sommes typiquement dans le mode de fonctionnement des sites WEB.

La diffusion a comme avantage majeur le fait que l'on puisse transmettre de l'information à des personnes dont on ne connais pas les coordonnées, et qui ne font pas parti d'une liste exhaustivement fixée à lors de la diffusion.

En revanche un problème majeur se pose lorsque l'on souhaite empêcher l'accès à certains usagers.

Des solutions ont été mise en oeuvre, toutes basées sur un accès restreints aux informations. Cette solution est par exemple illustrée par un site web qui gère une liste de membres privilégiés, et seuls ces membres peuvent accéder a certaines informations du sites.

Cette solution conserve plusieurs défaut :
- Les informations sont présente sur le site, et sont donc à la merci de malveillance extérieures qui pourraient s'introduire par malveillance dans le site, et voler ces informations.
- Les informations sont accessibles au moins par les personnes administrant le site. Ce problème est un vrai problème car un employé d'un site peu consulter, copier, voire emporter impunément ces informations.

Le mode d'échange « point à point » semble épargné par ce genre de défauts, mais une analyse plus poussée nous montre que :
En mode point à point les données sont échangées généralement sans protection, la confidentialité s'appuyant sur la liste exhaustive des destinataires. Un élément trop souvent ignoré est que les échanges point à point sont presque toujours établis via des serveurs.
Sorte de plateformes, ces serveurs permettent entre autre de garantir les envois, les redirections d'adresses, les renvois en cas de problèmes d'envois ou de réceptions.
Concrètement ces serveurs sont des ordinateurs, et afin de permettre un service optimal ils archivent tout ou partie des informations qu'ils traitent, pour une durée plus ou moins longue. Ainsi un message électronique envoyé entre deux utilisateurs est souvent enregistré dans la mémoire d'un ordinateur tiers. La encore se trouve les risques externes auquel un tel serveur peut être exposé, et la malveillance interne. Dans les deux cas, les informations échangées en « point à point » entre les utilisateurs peuvent être consultés par des personnes non prévues, et ainsi présenter une atteinte à la vie privée.

La présente invention propose un procédé d'encapsulation permettant d'obtenir des documents communicable par tous moyens, mais garantissant un respect optimal de la vie privée. Pour cela le procédé de l'invention consiste en l'encapsulation, dans un même document, d'une version de l'information accessible par tous les usagers, et une version consultable uniquement par un ensemble exhaustif et prédéfini d'usagers.

L'invention consiste, dans un premier temps, en un procédé d'encapsulation d'un document dit original, contenant une partie données, et pouvant contenir une partie métadonnées, par un dispositif électronique, apte à accéder à au moins un moyen de sécurisation contenant au moins deux algorithme cryptographique Algol, et Algo2, et ayant accès aux clés cryptographiques de destinataires privilégiés. Ce procédé comprend au moins les étapes de
- Ciblage, au cours de laquelle le détenteur du document original établit une liste de destinataires privilégiés habilités à accéder au document ;
- Encodage, au cours de laquelle les informations contenues dans la partie données du document original sont chiffrées avec l'algorithme Algo1 et une clef K pour obtenir des informations chiffrées, la clef K est chiffrée avec chacune des clés cryptographiques des membres de la liste, et l'algorithme Algo2, pour obtenir des chiffrés de K,
- Encapsulation , au cour de laquelle un nouveau document dit restreint est créé avec, dans sa partie données, de nouvelles informations, différentes des informations contenues dans la partie données du document original, ces informations ayant un format identique au format des informations contenues dans la partie données du document original, et dans sa partie métadonnées, au moins les informations chiffrées, ainsi que les chiffrés de K

Ce procédé peut comprendre, dans une étape préalable un service dit service de veille, est activé par l'exécution de commandes prédéfinies ayant pour cible un fichier dit fichier candidat contenant une partie données et pouvant contenir une partie métadonnées, le service de veille conditionne l'encapsulation à acceptation par le détenteur de ce fichier candidat.

L'algorithme cryptographique Algo1 peut être un algorithme symétrique.

L'algorithme cryptographique Algo2 peut être un algorithme asymétrique, et dans ce cas là, les clés cryptographiques sont des clés publiques (à entendre dans le contexte des couples PKI clé privée / clé publique).

Selon le mode de réalisation, le moyen de sécurisation peut être intégré dans le dispositif électronique, ou bien être un dispositif électronique distinct dudit dispositif électronique.

Les clés cryptographiques peuvent être présentes sur un dispositif électronique communicant dit server, distinct du dispositif électronique

Les nouvelles informations peuvent, selon le mode de réalisation, être générées à partir des informations contenues dans la partie données du document original, être générées avec l'aide d'un générateur de nombres aléatoires, être préenregistrées dans une mémoire dudit dispositif électronique, ou encore préenregistrées dans une mémoire dudit moyen de sécurisation.

L'invention consiste également en un procédé de consultation d'un document chiffré dit original contenant une partie données et une partie métadonnées qui contient des données chiffrées et des chiffrés de K, par un dispositif électronique, apte à accéder à au moins un moyen de sécurisation contenant au moins un algorithme cryptographique Algol, au moins un algorithme cryptographique Algo2, et ayant accès à au moins une clé cryptographique, le dispositif électronique possédant également un service dit service de reconversion. Ce procédé comprenant au moins les étapes de
- reconnaissance, au cours de laquelle, lors d'un accès au document original, le service de reconversion répète, jusqu'à épuisement des chiffrés de K ou l'obtention d'une clé K' valide les étapes suivantes:
   - déchiffrement d'un chiffré de K avec l'aide de la clé cryptographique et de l'algorithme Algo2 pour obtenir une clé K'
   - déchiffrement des données chiffrées avec la clé K' et l'algorithme Algo1
   - si les données déchiffrées ont un format identique au format des informations contenues dans la partie donnée du document original la clé K' est dite valide,
- si une clé K' valide à été trouvée,
- création d'un nouveau document dit déchiffré avec, dans sa partie données les données déchiffrées, et transmission du nouveau document au programme permettant sa consultation,
- si aucune clé K' n'est valide, transmission du document original au programme permettant sa consultation.

L'algorithme cryptographique Algo1 peut être un algorithme symétrique.

L'algorithme cryptographique Algo2 peut être un algorithme asymétrique, et dans ce cas là, la clé cryptographique est une clé privée (à entendre dans le contexte des couples PKI clé privée / clé publique). Selon le mode de réalisation, la clé cryptographique peut être stockée, par exemple, dans le dispositif électronique, ou bien dans un dispositif électronique distinct du dispositif électronique

D'autres caractéristiques et avantages de l'invention ressortiront clairement de la description qui en est faite ci-après, à titre indicatif et nullement limitatif, en référence aux dessins annexés dans lesquels :
- La figure 1 illustre l'encapsulation d'une image selon l'invention.
- La figure 2 représente la dé-encapsulation d'une image selon l'invention.
- La figure 3 illustre la mise en oeuvre de l'invention dans le contexte de la diffusion d'une photo en la mettant a disposition sur un serveur distant.
- La figure 4 illustre la consultation d'un document encapsulé par deux utilisateurs, un habilité à le consulter, et un non habilité.

La présente invention permet d'encapsuler un document de telle manière que tout utilisateur puisse consulter le document, mais que seules les personnes habilitées puissent obtenir certaines informations qu'il contient.

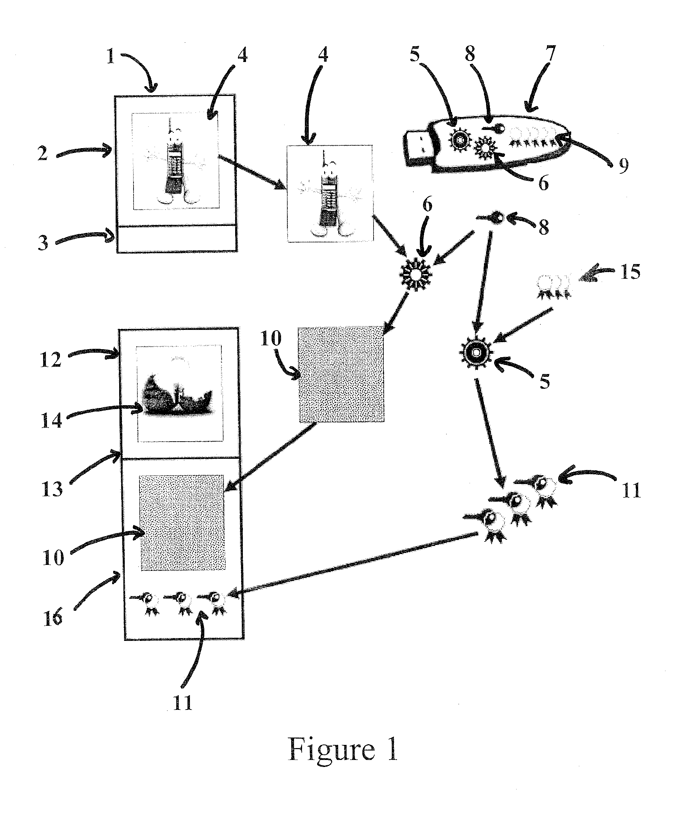

La figure 1 permet d'illustrer un mode d'implémentation du procédé d'encapsulation selon l'invention.

Le document 1 contient une partie donnée 2 et peut contenir un partie métadonnée 3. Dans la présente description, on utilise le terme de document pour parler de toute donnée ou groupe de données organisé selon un format donné. Ainsi tout fichier informatique représente un document au sens de l'invention, pour peu que son enregistrement se fasse dans un format précis. Sont notamment des documents au sens de l'invention tout fichier texte, image, son vidéo, etc.

Dans la suite de la description nous prendrons l'exemple d'une image, sans pour autant limiter la portée de l'invention.

Une métadonnée (qui signifie étymologiquement « donnée de/à propos de donnée »), par définition est : « une donnée servant à définir ou décrire une autre donnée quel que soit son support ».

Dans l'univers numérique, à toute donnée est associée des métadonnées. En effet, ces données peuvent apporter des paramètres complexes permettant par exemple l'interopérabilité de la donnée principale, ou bien des informations comme la date de création, la résolution d'une image, ou le taux de compression d'un fichier audio. Ces données additionnelles sont accrochées à une donnée dite principale. Ainsi dans la suite du document, la « partie métadonnée » d'un document s'entendra comme intrinsèquement liée à la « partie donnée », de ce même document.

Le document image 1 de la figure 1 possède ainsi une partie donnée 2, qui contient l'image 4 en elle même, et peut contenir une partie métadonnée 3. Le contenu de la partie métadonnée, à ce stade du procédé n'est pas critique. Si des métadonnées existent dans le fichier 1, alors elles pourront être conservées ou recopiées dans la suite des étapes.

Afin de mettre en oeuvre l'invention, un moyen de sécurisation est nécessaire. Ce moyen peut être un service offert par un dispositif électronique global, ou bien être contenu dans un dispositif électronique indépendant. Le mode d'implémentation décrit dans la présente description embarque ces fonctionnalités dans un dispositif externe sécurisé 7, de type carte à puce, ou « dongle ».

Ce moyen peut se définir par un ensemble minimal de services qu'il doit fournir :
- un algorithme cryptographique Algo1 6,
- un algorithme cryptographique Algo2 5,
- un moyen d'obtenir une clé 8,
- un moyen d'obtenir des clés cryptographiques 9,

La présente invention peut être implémentée avec tous types d'algorithmes cryptographiques. Notamment les algorithmes à clé secrètes (ou symétriques) , les algorithmes à clé privée (ou asymétriques), les algorithmes basés sur IBE (en anglais « Identity Based Encryption »), ou le chiffrement de groupe.

La présente description illustrera le fonctionnement de l'invention en choisissant arbitrairement :
- Comme algorithme cryptographique Algo1, un algorithme symétrique,
- Comme algorithme cryptographique Algo1, un algorithme asymétrique,

La cryptographie symétrique, ou cryptographie à clé secrète est basée sur la connaissance partagée d'un secret entre deux acteurs.

Les algorithmes utilisés, tels que par exemple le DES, 3DES, AES, ... s'appuient sur le fait qu'il est presque impossible, connaissant le chiffré d'un message, de retrouver le message clair sans connaitre le clé utilisée pour le chiffrement.

Le rôle crucial que joue la clé dans ces schémas justifie la mise en oeuvre de nombreux mécanismes satellites afin d'en assurer la confidentialité.

La cryptographie asymétrique, ou cryptographie à clé publique est fondée sur l'existence de fonctions à sens unique.

Ainsi, la cryptographie à clé publique est un procédé asymétrique utilisant une paire de clés. Ces clés, généralement baptisées « clé publique » et « clé privée », sont construites de telles manière que, ce qui est chiffré avec l'aide d'une de ces clés ne peut être déchiffré que par la seconde.

Le principe est donc de distribuer la clé publique tout en conservant secrète la clé privée. Tout utilisateur possédant une copie de la clé publique pourra chiffrer des informations que seul le propriétaire de la clé privée pourra déchiffrer.

On peut noter qu'il est impossible de deviner la clé privée à partir de la clé publique.

La génération des couples clé publique/clé privée, ne fait pas l'objet de la présente invention. Tous les procédés décrits par l'état de l'art, ou à venir, qui permettent d'obtenir un tel couple de clé s'appliquent à la présente invention.

Les clés de type « chiffrement de groupe », qui permettent d'associer à une clé publique, plusieurs clés privées, chacune permettant de déchiffrer tout ou partie de ce qui a été chiffré avec la clé publique, s'appliquent parfaitement à la présente invention.

Ainsi le dispositif 7 peut contenir dans une mémoire, les clés publiques de correspondants potentiels. Dans un mode particulier d'implémentation de l'invention, ces clés ne sont pas stockées dans le dongle 7, mais sur un serveur distant, avec lequel le dongle est en contact. Ce serveur est par exemple un tiers de confiance comme décrit dans l'état de l'art. Ce tiers de confiance peut ainsi être en charge de la distribution des clés publiques.

La clé 8 est associée à l'algorithme symétrique 6. Cette clé peut être enregistrée dans une mémoire du dongle 7, ou bien obtenue. L'obtention de clé est très intéressant dans le cas ou la clé 8 n'est pas unique. Par exemple une clé différente peut être utilisée pour chaque encapsulation, ou bien une clé peut avoir une durée de validité définie, ou encore un nombre d'encapsulation fini.

Dans tous ces exemples, il est très intéressant de pouvoir obtenir des clés autres que celles enregistrées dans une des mémoires du dongle.

Il est possible de générer les clés 8 dans le dongle 7 grâce à des mécanismes tels que les générateurs de nombres aléatoires. Il est également possible d'obtenir la clé 8 auprès d'un dispositif externe. Dans ce dernier cas, compte tenu de la criticité de cette clé, nous préconisons la mise en place de mesures de sécurité afin de garantir la confidentialité de cette clé lors de son transport jusqu'au dongle 7.

Dans la présente description, nous ne présenterons pas les schémas d'échanges qui permettent d'obtenir ou de transmettre des clés dans des conditions optimales de sécurité.

L'implémentation de l'invention peut se trouvée associée à tous les mécanismes satellites de sécurisation existants ou à venir.

Lors de l'encapsulation selon l'invention illustrée par la figure 1, l'image 4 contenue dans le fichier A doit être encapsulée. Cette image est chiffrée avec l'algorithme 6, et la clé 8, pour obtenir une image chiffrée 10.

La clé 8 est alors chiffrée avec l'algorithme 5, et les clés publiques 15 des utilisateurs qui pourront consulter l'image 4.

Les clés 15 sont un sous ensemble des clés 9, auquel le dongle a accès.

Dans un mode particulier de réalisation, cette étape de chiffrement des clés peut se faire en amont de l'étape d'encapsulation elle même.

En effet il est envisageable que le dongle possède, en fonction d'une clé 8, des chiffrés de cette clé avec tout ou partie des clés 9 liées aux destinataires potentiels. Ce choix peut par exemple se faire en fonction des destinataires choisis lors des encapsulations précédentes.

Dans le cas ou la clé 8 et les clés 9 sont obtenues depuis un dispositif électronique externe, il est parfaitement envisageable que le dongle 7 obtienne une clé 8 (par exemple chiffrée avec des identifiants publics liés au dongle 7), et des chiffrés de cette clé avec les clés utilisateurs souhaités.

Dans ce cas, cette étape de génération de chiffrés de la clé est en fait externalisé vers un dispositif tiers.

Le procédé d'encapsulation peut désormais construire un nouveau document 12, dont le format est identique à celui du document 1, et avec dans sa partie donnée 13, des informations 14 différentes des informations 4, et dans sa partie métadonnées 16, le chiffré 10, ainsi que les chiffrés 11 de la clé 8.

Dans le cas ou le document 1 contient des métadonnées, elles peuvent être recopiées dans les métadonnées du nouveau document 12.

Les informations 14, insérées dans le nouveau document 12 peuvent être de quelle manière que ce soit, tant qu'elles sont différentes des informations 14.

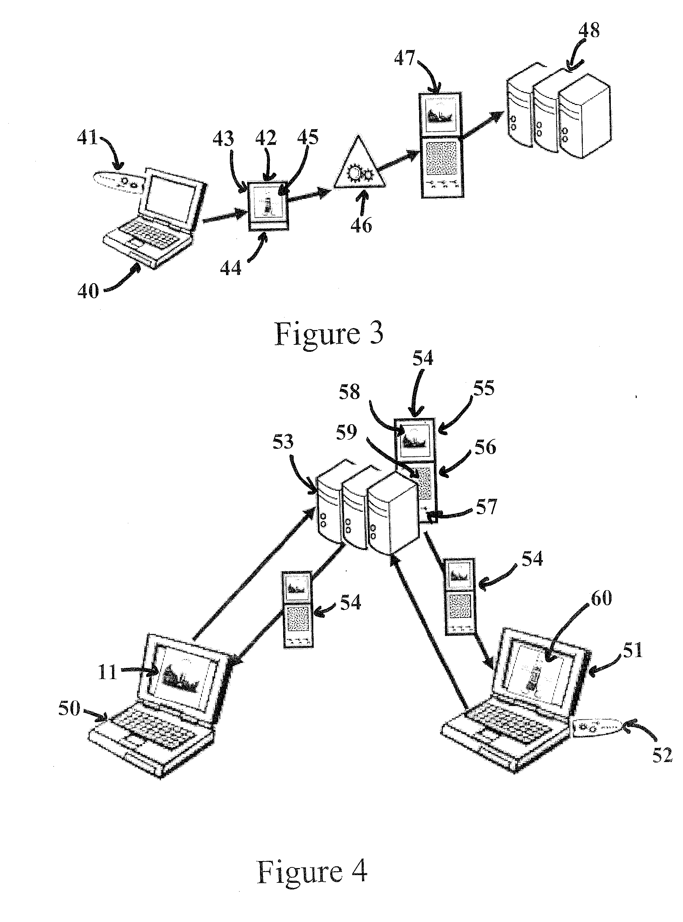

**Dans un mode** particulièrement intéressant d'implémentation de l'invention, les données 14 gardent le même format que les données 4, notamment en terme de taille. Dans la figure 1, les dimensions de l'image 14 et les dimensions de l'image 4 sont identiques. Les avantages de cette génération particulière ressortirons plus tard, notamment dans la figure 4.

Ces informations 14 peuvent être issues des informations 4. Par exemple dans le cas d'une image, il est possible de la modifier afin d'obtenir la nouvelle image 14. Ces modifications peuvent par exemple être un flou, un découpage de l'image en zones, et un mélange de ces zones, l'apposition d'une informations, ou toute autre modification. Cette méthode de génération des données 14 a partir des données 4 s'applique a tout type d'information, graphiques, sonores, texte, vidéo, etc...

Il est également possible d'obtenir des données 14 sans lien avec les données 4. Nous sommes par exemple dans le cas ou les données 14 sont stockées dans une mémoire du dongle7 ou bien d'un dispositif électronique auquel il a accès.

Dans la figure 1, les informations 14 constituent une image à part entière. Il est possible de générer de telles informations, par exemple de manière aléatoire, ou bien en fonction de paramètres dits locaux, comme par exemple la date, l'heure, ou toute autre information qui serait en possession du dongle 7 au moment de la génération. Dans un mode particulièrement intéressant de génération d'informations 14, des informations sur l'identité de l'utilisateur qui réalise l'encapsulation peuvent servir de paramètres. Ainsi, les informations 14 peuvent contenir des éléments permettant d'identifier cet utilisateur, qu'il s'agisse d'un service informatique, ou d'un intervenant humain. Les avantages de cette génération particulière ressortirons plus tard, notamment dans la figure 4.

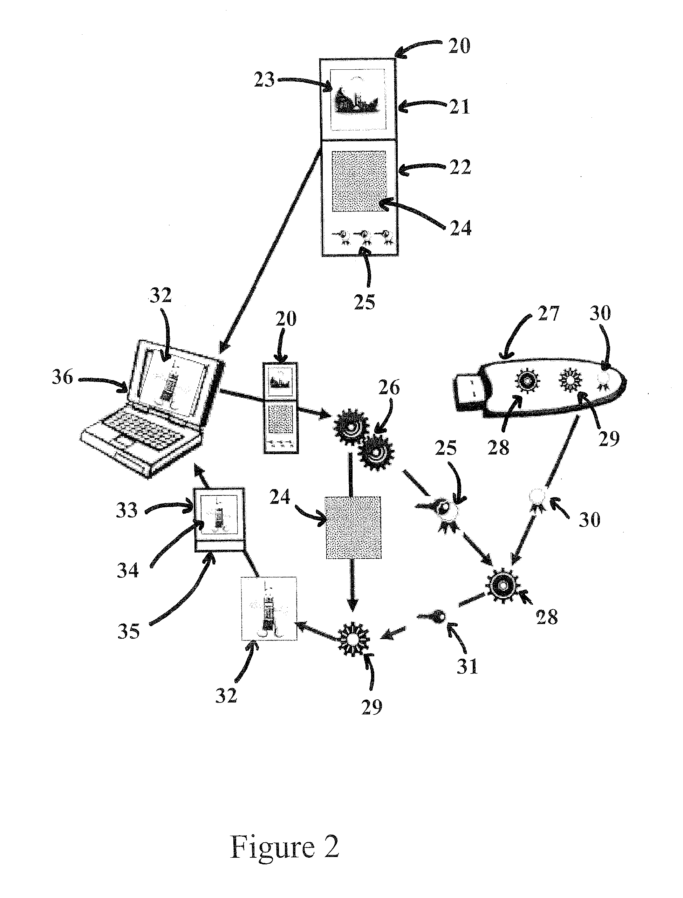

La figure 2 illustre la décapsulation d'un document 20 encapsulé selon le procédé décrit dans la figure 1.

L'utilisateur, symbolisé par l'ordinateur 36, tente de consulter le contenu du document 20. Un service 26, analyse le document 20, et constate que le document 20 comporte, dans sa partie données 21, des informations 23, et dans sa partie métadonnées 22, des données chiffrées 24 et des chiffrés de clé 25. Ce service 26 peut être automatique, ou bien être un logiciel exécuté suite à une action volontaire de l'usager.

Dans cas ou ce service est automatique, il peut, dans un mode préféré d'implémentation de l'invention, être intégré au programme généralement utilisé pour consulter les documents du même format que le document 20. Ce service peut ainsi prendre la forme d'un « plugin » qui vient ajouter des fonctionnalités à une logiciel existant. Dans l'illustration de la figure 2, le service 26 est par exemple un plugin associé au programme de visualisation d'image.

Une fois le format particulier du document 20 identifié par le service 26, celui-ci envoie le ou les chiffrés de clés au dongle 27.

Ce dongle, exemple de moyen de sécurisation selon l'invention, comporte un algorithme asymétrique 28, et un algorithme symétrique 29, respectivement liés aux algorithmes 5 et 6 ayant servis lors de l'encapsulation. Le moyen de sécurisation 27 comporte également une clé privée 30, ou un moyen d'obtenir une clé privée 30. Dans le cas ou les algorithmes 28 et 6 sont des algorithmes symétriques, la clé 30 serait identique à la clé 15.

Le dongle 27 tente de déchiffrer les chiffrés de clés 25, avec sa clé 30 et 1 algorithme 28. Les clés candidates 31 ainsi obtenues sont testées en les utilisant pour déchiffrer les données chiffrées 24 avec l'algorithme 29. Si le résultat 32 du déchiffrement est du même format que les données 23, alors la clé 31 est considérée comme valide.

Lors de cette étape, le format s'entend au sens du format des données informatique, à savoir le type. Par exemple un fichier image au format JPEG (pour « Joint Photographic Expert Group »), ou bien un fichier texte au format RTF (pour « Rich Text Format »)

Dès lors, si tous les chiffrés de clés 25 n'ont pas été testés, il est possible de ne pas les analyser.

Un nouveau document 34 est créé par le service 26, avec, dans sa partie données 34, les données déchiffrées 32, et dans sa partie métadonnées 35, les éventuelles données, contenues dans la partie métadonnées 22 du document 20, autre que les données chiffrées 24 et les chiffrés de clé 25.

La figure 3 décrit un mode d'implémentation de l'invention dans lequel un service d'encapsulation est ajouté, afin de déclencher celle-ci lors d'évènements prédéfinis.

L'utilisateur 40 est ici symbolisé par un ordinateur, sur lequel est connecté un dongle 41, illustrant la présence des moyens nécessaires et suffisants à la mise en oeuvre de l'invention. L'utilisateur manipule un fichier image 42, avec une partie donnée 43 et une partie métadonnées 44. Un service 46 est présent sur l'ordinateur, et va analyser les opérations effectuées sur le document 42. Ce service possède une liste d'actions qui peuvent déclencher une encapsulation. Dans un mode de réalisation préféré, le service 46 est un « plugin » qui est associé au programme utilisé normalement pour la manipulation des documents du même format que le document 42, ou susceptible de manipuler des documents du même format que le document 42.

Ainsi dans notre exemple, le programme auquel est associé le service 46 est un navigateur internet. Les règles de fonctionnement du service 46 sont prévue pour réagir au téléchargement d'une image vers l'extérieur. Ainsi, si le service 46 détecte que l'utilisateur est en train d'envoyer une image 42, vers un serveur 48, le service va interrompre cette opération, e t proposer une encapsulation. Dans l'éventualité de l'acceptation par l'utilisateur, le service peut, par exemple demander a l'utilisateur la liste des destinataires de l'image en question. Avec ces informations, le service 46 peut encapsuler le document 42, et ainsi produire un document 47 encapsulé, et reprendre le téléchargement interrompu avec ce nouveau document. Le serveur 48 reçoit le document 47 en lieu et place du document 42.

La figure 4 illustre deux tentatives d'accès à un document encapsulé 54, hébergé sur un serveur 53, par exemple un serveur internet. L'utilisateur illustré par l'ordinateur 51 est habilité à consulter le document 54, en revanche, l'utilisateur illustré par l'ordinateur 50 n'est pas habilité à le consulter.

Les deux ordinateurs 50 et 51 demandent tous les deux au serveur, le document 54. Le serveur, qui n'est pas nécessairement conscient que le document 54 est un document encapsulé, fournit le document aux deux demandeurs.

L'utilisateur 50, ne possède pas les moyens nécessaires et suffisants à la mise en oeuvre de l'invention, ou ne fais pas parti des destinataires dont les clés ont étés utilisées pour créer les chiffrés de clés 57 présents dans la partie métadonnée 56. Le document 54 est donc traité comme un document standard par sa suite logicielle, les informations 54 de la partie données 55 sont donc exploitées, et les métadonnées 56 sont a disposition. Ainsi, dans l'exemple d'une image, cet utilisateur va pourvoir visualiser l'image 58, sans avoir conscience qu'une autre image est cachée dans le chiffré 59.

Le mode de réalisation qui, lors de l'encapsulation, fait en sorte que les informations 58 aient le même format que les informations originales 60 avant encapsulation, permet d'assurer un service homogène entre les utilisateurs habilités et ceux non habilités.

En effet si nous prenons l'exemple d'un site internet qui contient des images, si ces images sont encapsulées, il faut tout de même que le site puisse s'afficher pour les utilisateurs non habilites a consulter ces images. Ainsi, il est intéressant de faire en sorte que les données 58 utilisées dans la partie données du document encapsulé soient de même nature que les données originales, et de même format. Le format s'entend ici en terme de dimensions, de qualité. Ainsi un document encapsulé est utilisable par des personnes habilités ou non, de la même manière, dans les mêmes conditions avec le même rendu, mais pas le même contenu.

Lors de l'encapsulation, nous avons exposé un mode de génération des informations 60, prenant en paramètre au moins une information liée à l'utilisateur qui a initié l'encapsulation. Ce mode de réalisation permet de faire en sorte qu'un utilisateur non habilité, lors de la consultation d'un document encapsulé, puisse identifier tout ou partie de l'identité du détenteur de l'information originale, par exemple pour lui demander l'habilitation.

## Revendications

1. Procédé d'encapsulation d'un document (1) dit original, contenant une partie données (2), et pouvant contenir une partie métadonnées (3), par un dispositif électronique, apte à accéder à au moins un moyen de sécurisation (7) contenant au moins un premier algorithme cryptographique (6) Algol, au moins un second algorithme cryptographique (5) Algo2, et ayant accès aux clés cryptographiques (9) de destinataires privilégiés, **Caractérisé en ce qu**'il comprend au moins les étapes de
- Ciblage, au cours de laquelle le détenteur dudit document original établit une liste (15) de destinataires privilégiés habilités à accéder audit document (1);
- Encodage, au cours de laquelle les informations (4) contenues dans la partie données dudit document original (1) sont chiffrées avec ledit algorithme (6) Algo1 et une clef (8) K pour obtenir des informations chiffrées (10), ladite clef K est chiffrée avec chacune dédites clés cryptographiques (15) des membres de ladite liste, et l'algorithme (5) Algo2, pour obtenir des chiffrés de K (11),
- Encapsulation , au cour de laquelle un nouveau document (12) dit restreint est créé avec, dans sa partie données (13), de nouvelles informations (14), différentes des informations (4) contenues dans la partie données du document original (1), lesdites informations (14) ayant un format identique au format desdites informations (4) contenues dans la partie données du document original (1), et dans sa partie métadonnées (16), au moins lesdites informations chiffrées (10), ainsi que lesdits chiffrés de K (11).

2. Procédé d'encapsulation selon la revendication 1 **caractérisé en ce que**, dans une étape préalable, un service (46) dit service de veille, est activé par l'exécution de commandes prédéfinies ayant pour cible un fichier dit fichier candidat contenant une partie données et pouvant contenir une partie métadonnées, ledit service de veille conditionne l'encapsulation à acceptation par le détenteur dudit fichier candidat.

3. Procédé d'encapsulation selon l'une quelconque des revendications 1 ou 2, **caractérisé en ce que**, ledit algorithme cryptographique Algo1 (6) est un algorithme symétrique.

4. Procédé d'encapsulation selon l'une quelconque des revendications 1 ou 2, **caractérisé en ce que**, ledit algorithme cryptographique Algo2 (5) est un algorithme asymétrique, et lesdites clés cryptographiques (9) sont des clés publiques.

5. Procédé d'encapsulation selon l'une quelconque des revendications 1 ou 2, **caractérisé en ce que**, ledit moyen de sécurisation (7) est intégré dans ledit dispositif électronique.

6. Procédé d'encapsulation selon l'une quelconque des revendications 1 ou 2, **caractérisé en ce que**, ledit moyen de sécurisation (7) est un dispositif électronique distinct dudit dispositif électronique.

7. Procédé d'encapsulation selon l'une quelconque des revendications 1 à 6, **caractérisé en ce que**, lesdites clés cryptographiques (9) sont présentes sur un dispositif électronique communicant dit server, distinct dudit dispositif électronique.

8. Procédé d'encapsulation selon l'une quelconque des revendications 1 à 7, **caractérisé en ce que** lesdites nouvelles informations (14) sont générées à partir desdites informations (4) contenues dans la partie données du document original (1).

9. Procédé d'encapsulation selon l'une quelconque des revendications 1 à 7, **caractérisé en ce que** lesdites nouvelles informations (14) sont générées avec l'aide d'un générateur de nombres aléatoires.

10. Procédé d'encapsulation selon l'une quelconque des revendications 1 à 7, **caractérisé en ce que** lesdites nouvelles informations (14) sont préenregistrées dans une mémoire dudit dispositif électronique.

11. Procédé d'encapsulation selon l'une quelconque des revendications 1 à 7, **caractérisé en ce que** lesdites nouvelles informations (14) sont préenregistrées dans une mémoire dudit moyen de sécurisation (7).

12. Procédé de consultation d'un document chiffré (54) dit original contenant une partie données (55) et une partie métadonnées (56) qui contient des données chiffrées (59) et des chiffrés de K (57), par un dispositif électronique (51), apte à accéder à au moins un moyen de sécurisation (52) contenant au moins un algorithme cryptographique Algol, au moins un algorithme cryptographique Algo2, et ayant accès à au moins une clé cryptographique, ledit dispositif électronique possédant également un service dit service de reconversion, **Caractérisé en ce qu**'il comprend au moins les étapes de
- reconnaissance, au cours de laquelle lors d'un accès audit document original, ledit service de reconversion répète, jusqu'à épuisement des chiffrés de K ou l'obtention d'une clé K' valide les étapes suivantes:
- déchiffrement d'un chiffré de K avec l'aide de ladite clé cryptographique et de l'algorithme Algo2 pour obtenir une clé K'
- déchiffrement desdites données chiffrées avec la clé K' et l'algorithme Algo1
- si lesdites données déchiffrées ont un format identique au format des informations contenues dans ladite partie donnée dudit document original ladite clé K' est dite valide,
- si une clé K' valide à été trouvée :
- création d'un nouveau document dit déchiffré avec, dans sa partie données lesdites données déchiffrées, et transmission dudit nouveau document au programme permettant sa consultation,
- si aucune clé K' n'est valide, transmission dudit document original au programme permettant sa consultation.

13. Procédé d'encapsulation selon la revendication 12, **caractérisé en ce que**, ledit algorithme cryptographique Algo1 est un algorithme symétrique.

14. Procédé d'encapsulation se selon la revendication 12, **caractérisé en ce que**, ledit algorithme cryptographique Algo2 est un algorithme asymétrique, et ladite clé cryptographique est une clé privée.

15. Procédé d'encapsulation selon l'une quelconque des revendications 12 à 14, **caractérisé en ce que**, ladite clé cryptographique est stockée dans ledit dispositif électronique

16. Procédé d'encapsulation selon l'une quelconque des revendications 12 à 14, **caractérisé en ce que**, ladite clé cryptographique est stockée dans un dispositif électronique distinct dudit dispositif électronique
